# EUROPÄISCHE PATENTANMELDUNG

(11) **EP 1 389 541 A1**
(43) Veröffentlichungstag der Anmeldung: **18.02.2004**
(21) Anmeldenummer: 03013907.5
(22) Anmeldetag: 20.06.2003
(51) Int. Cl.: B60D 1/36

(54) **Verfahren und Vorrichtung zur Positionierung zweier Gegenstände zueinander**

(30) Priorität: 16.08.2002 DE 10237615
(71) Anmelder: Blankenheim, Karl-Heinz, 53881 Euskirchen-Kirchheim (DE)
(72) Erfinder: Kipp, Stefan, 42389 Wuppertal (DE)
(74) Vertreter: KEIL & SCHAAFHAUSEN

(57) **Zusammenfassung**

Es wird ein Verfahren sowie eine Vorrichtung zur Positionierung zweier Gegenstände (2, 3) zueinander, die jeweils eine Längsachse (A₂, A₃) aufweisen, insbesondere zur Positionierung einer anhängerseitigen Kupplung (4) relativ zu einer zugmaschinenseitigen Kupplung (5) vorgeschlagen. Die Vorrichtung umfasst dabei einen Sender (6), der einen Signalstrahl (10) in einem definierten Abstrahlwinkel (α) auf eine Empfängereinheit (7) gerichtet abstrahlt. Die Empfängereinheit (7) umfasst mehrere beidseits eines der Längsachse (A₂) eines der Gegenstände (2) zugeordneten zentralen Punktes (11) nebeneinander angeordnete Empfänger (12a, 12b). Die beiden Längsachsen (A₂, A₃) der Gegenstände können dabei im Wesentlichen miteinander fluchtend ausgerichtet werden, indem die Gegenstände derart relativ zueinander bewegt werden, dass die gleiche Anzahl vom Empfängern (12a, 12b) auf beiden Seiten des zentralen Punktes (11) der Empfängereinheit (7) des Signalstrahl (10) erfassen. Zudem können die beiden Gegenstände (2, 3) über eine Abstandsmessung mittels des Senders (6) und der Empfängereinheit (7) gesteuert aneinander angenähert werden.

## Beschreibung

Die Erfindung betrifft ein Verfahren zur Positionierung zweier Gegenstände relativ zueinander, die jeweils eine Längsachse aufweisen, insbesondere zur Positionierung einer anhängerseitigen Kupplung relativ zu einer zugmaschinenseitigen Kupplung, mittels eines der Längsachse des ersten Gegenstandes zugeordneten Senders, einer zugeordneten Empfängereinheit, die mehrere nebeneinander angeordnete Empfänger beidseits eines der Längsachse des zweiten Gegenstandes zugeordneten zentralen Punktes umfasst. Weiter betrifft die Erfindung eine Vorrichtung zum Durchführen eines derartigen Verfahrens.

Üblicherweise erfolgt das Verbinden eines Anhängers mit einem Kraftfahrzeug als Zugmaschine, indem letztere rückwärts auf den stehenden Anhänger zu bewegt wird, bis die anhängerseitige Kupplung so weit an die zugmaschinenseitige Kupplung angenähert ist, dass diese miteinander verbunden werden können. Aufgrund der schlechten Sichtmöglichkeiten bei der Rückwärtsfahrt wird der Fahrer der Zugmaschine häufig von einem Helfer eingewiesen, der dem Fahrer der Zugmaschine die Position des Fahrzeugs relativ zu dem Anhänger anzeigt. In Fällen, in denen eine Hilfsperson nicht zur Verfügung steht, kann es daher vorkommen, dass die Zugmaschine und der Anhänger beim Versuch der Annäherung der beiden Kupplungsteile aneinander stoßen, so dass die Zugmaschine und/oder der Anhänger beschädigt werden.

Insbesondere bei Lastkraftwagen ist es daher bekannt, am Heck der Zugmaschine eine Kamera vorzusehen, von der Bilddaten auf ein Anzeigegerät im Führerhaus übertragen werden, so dass die Annäherung der Zugmaschine an den Anhänger für den Fahrer erleichtert wird. Diese Technologie ist jedoch vergleichsweise teuer, so dass sich der Einbau nur in Fahrzeuge lohnt, mit denen regelmäßig Anhänger gezogen werden.

Weiter werden PKWs in jüngster Zeit häufig mit Einparkhilfen ausgestattet. Dies sind zumeist vier oder sechs in der hinteren Stoßstange im Abstand voneinander angeordnete Sensoren, die eine Abstandsmessung durchführen und bei Annäherung an ein Hindernis bspw. akustische Warnungen an den Fahrer abgeben. Von diesen Sensoren werden jedoch nur größere Gegenstände erfasst, so dass eine zielgenaue Positionierung eines Fahrzeugs an eine anhängerseitige Kupplung mit derartigen Systemen nicht möglich ist.

Aus der DE 43 03 815 A1 ist eine Rückfahr- und Ankuppelhilfseinrichtung für Kraftfahrzeuge bekannt, welche eine erste Sende- und Empfangseinheit aus mehreren Ultraschallsensoren, die nebeneinander einem Kupplungsmaul einer Zugmaschine zugeordnet sind, und eine weitere, der Deichsel eines Anhängers zugeordnete Sende- und Empfangseinheit mit einem Ultraschallsensor aufweist. Der Seitenversatz in der Ebene der ersten Sende- und Empfangseinheit zwischen dem Kupplungsmaul und der Deichsel sowie der Abstand in einer dazu senkrechten Richtung werden über die Messung des Laufweges eines Impulses zwischen den Sende- und Empfangseinheiten mittels eines Steuergerätes ermittelt, welches mit einer Steuer- und Anzeigeeinrichtung verbunden ist. Diese Messung ist zeitaufwendig, da zunächst von der ersten Sende- und Empfangseinheit ein Impuls an die weitere Sende- und Empfangseinheit ausgesendet wird, um letztere zu aktivieren. Erst nach einer Wartezeit, in der alle Mehrfachreflexionen abgeklungen sind, kann dann der zur Messung genutzte Impuls von der zweiten Sende- und Empfangseinheit an die erste Sende- und Empfangseinheit ausgesendet werden.

Weiter ist aus der US 4,852,901 eine Vorrichtung zum Positionieren eines Anhängers relativ zu einer Zugmaschine bekannt. Hierzu wird von einem ersten Sender an der Deichsel des Anhängers ein im Querschnitt rechteckiger Infrarotstrahl in Richtung auf mehrere nebeneinander an der Zugmaschine angeordnete Sensoren gesendet, so dass die Zugmaschine zu dem Anhänger ausgerichtet ist, wenn der Infrarotstrahl auf einen zentralen Sensor trifft. Über einen zweiten Sender wird ein zweiter fokussierter Infrarotstrahl auf einen zweiten Sensor gerichtet, um eine Abstandsmessung zwischen dem Anhänger und der Zugmaschine zu ermöglichen. Durch die separaten Sender und Sensoren zur Abstandsmessung und zur Bestimmung der Lage des Anhängers zu der Zugmaschine ist diese Vorrichtung in der Herstellung und Montage, bspw. bei der Nachrüstung, aufwendig. Die Sensoren sind über eine (fest verdrahtete) Schaltung mit Leuchtdioden verbunden, die dem Fahrer der Zugmaschine deren Lage relativ zu dem Anhänger anzeigen.

Aufgabe der Erfindung ist es daher, ein Verfahren sowie eine kompakte Vorrichtung der eingangs genannten Art bereit zu stellen, die eine Positionierung zweier Gegenstände zueinander zuverlässig gewährleistet und gleichzeitig mit geringen Kosten bspw. an Kraftfahrzeugen nachgerüstet werden kann.

Diese Aufgabe wird erfindungsgemäß mit einem Verfahren gelöst, bei welchem der Sender einen Signalstrahl in einem definierten Abstrahlwinkel abstrahlt, welcher von der mit einem Rechner bzw. Mikrokontroller verbundenen Empfängereinheit erfasst wird. Die beiden Längsachsen der Gegenstände werden im Wesentlichen miteinander fluchtend ausgerichtet, indem die Gegenstände derart relativ zueinander bewegt werden, bis die gleiche Anzahl von Empfängern auf beiden Seiten des zentralen Punktes der Empfängereinheit den Signalstrahl mit im Wesentlichen gleicher Intensität erfassen. Weiter werden die beiden Gegenstände dann über eine Abstandsmessung mittels des Senders und der Empfängereinheit gesteuert aneinander angenähert. Der Erfindung liegt dabei der Gedanke zugrunde, dass zur Positionierung der beiden Gegenstände zueinander zusätzlich zu der Bestimmung ihres Abstands auch die Ausrichtung ihrer Längsachsen ermittelt wird. Dadurch ist es möglich, eine Zugmaschine derart zu einem Anhänger zu dirigieren, dass die anhängerseitige und die zugmaschinenseitige Kupplung so dicht beieinander liegen, dass sie miteinander verbunden werden können und gleichzeitig die Längsachse des Zugfahrzeugs im Wesentlichen fluchtend zu der des Anhängers ausgerichtet ist. Bei einem festgelegten Abstrahlwinkel des Signalstrahls des Senders kann durch die Anzahl und Position auf der Empfängereinheit der von dem Sendestrahl erfassten Empfänger und die Intensität der von den Empfängern detektierten Signalstrahlen eine fluchtende Ausrichtung der Längsachsen der relativ zueinander zu positionierenden Gegenstände erfolgen. Die Intensität des Signalstrahls kann bspw. durch eine Signalstärkenmessung oder die Messung der Amplitudenhöhe erfolgen. Die Positionierung der beiden Gegenstände kann dabei mit nur einem Sender und einer Empfängereinheit erfolgen.

In Weiterbildung des Erfindungsgedankens ist es vorgesehen, dass nach der fluchtenden Ausrichtung der Längsachsen der Gegenstände zueinander vor oder während der Annäherung der Gegenstände eine Kalibrierung der Abstandsmessung erfolgt, indem der Abstand zwischen dem Sender und der Empfängereinheit berechnet wird, wenn der Signalstrahl zwei im gleichen Abstand von dem zentralen Punkt der Empfängereinheit angeordnete Empfänger verlässt. Wenn die Längsachsen der relativ zueinander zu positionierenden Gegenstände im Wesentlichen fluchtend ausgerichtet sind, trifft der Signalstrahl des Senders stets auf eine gleich große Fläche auf beiden Seiten des zentralen Punktes der Empfängereinheit und damit auf eine gleich große Anzahl von Empfängern, die beidseits des zentralen Punktes der Empfängereinheit nebeneinander angeordnet sind. In dem Moment, in dem der Signalstrahl des Senders auf beiden Seiten des zentralen Punktes der Empfängereinheit gerade von jeweils einem Empfänger nicht erfasst wird, ist auf diese Weise bei bekanntem Abstrahlwinkel des Signalstrahls und bekannten Abstand der beiden Empfänger eine exakte Bestimmung der Entfernung zwischen der Empfängereinheit und dem Sender möglich. Dadurch kann eine Kalibrierung der Abstandsmessung erfolgen, um störende Einflüsse bei der Abstandsmessung, bspw. durch Verschmutzung des Senders und/oder der Empfängereinheit, zu vermeiden.

Vorzugsweise wird nach der Kalibrierung die Abstandsmessung über die Messung der Amplitudenhöhe des Signalstrahls durchgeführt. Die Abstandsmessung ist auf diese Weise mit hoher Präzision und einfachen technischen Mitteln durchführbar.

Wenn der Signalstrahl ein modulierter Infrarotstrahl ist, kann zudem eine Messungenauigkeit durch einfallendes Umgebungslicht auf die Empfängereinheit berücksichtigt werden.

Es wird bevorzugt, dass die von der Empfängereinheit detektierten Signalstrahlen an den Rechner bzw. Mikrokontroller weitergeleitet werden, von welchem sie an eine Sprach- und/oder Anzeigeausgabe weitergeleitet werden. Dies ermöglicht es, bspw. dem Fahrer einer Zugmaschine die Ergebnisse der Abstandsmessung sowie der Ausrichtung des Zugfahrzeugs zu dem Anhänger akustisch und/oder optisch zu übermitteln.

Die Signale können dabei von der Empfängereinheit an den Rechner bzw. Mikrokontroller und/oder von diesem an ein Ausgabegerät über eine Kabelverbindung oder mittels Funkübertragung weitergeleitet werden.

Die der Erfindung zugrunde liegende Aufgabe wird darüber hinaus von einer Vorrichtung mit einem Sender, einer Empfängereinheit und einem Rechner oder Mikrokontroller, wobei der Sender der Längsachse eines ersten Gegenstandes zugeordnet ist und zur Ausrichtung der Gegenstände zueinander und zur Abstandsmessung einen Signalstrahl mit einem festgelegten Abstrahlwinkel aussendet und die Empfängereinheit der Längsachse des anderen Gegenstandes zugeordnet ist und mehrere beidseits eines zentralen Punktes nebeneinander angeordnete Empfänger umfasst. Durch den festgelegten Abstrahlwinkel des Signalstrahls des Senders und die nebeneinander beidseits eines zentralen Punktes der Empfängereinheit angeordneten Empfänger ist nicht nur eine präzise Abstandsmessung zwischen dem Sender und der Empfängereinheit möglich, sondern auch eine Ausrichtung der Gegenstände, an denen der Sender bzw. der Empfänger befestigt ist zueinander, so dass die Längsachsen der Gegenstände im Wesentlichen miteinander fluchten. Die Vorrichtung eignet sich daher insbesondere für den Einsatz an einer Zugmaschine und einem Anhänger, um die zugmaschinenseitige Anhängerkupplung an die anhängerseitiger Kupplung präzise anzunähern.

Die von der Empfängereinheit aufgefangenen Signalstrahlen werden vorzugsweise über den Rechner bzw. Mikrokontroller zu Daten weiterverarbeitet, die mittels einer dem Rechner bzw. Mikrokontroller zugeordneten Sprach- und/oder Anzeigeausgabe ausgegeben werden. Dadurch erhält bspw. der Fahrer einer Zugmaschine unmittelbar Informationen über die Ausrichtung der zugmaschinenseitigen Kupplung relativ zu der anhängerseitigen Kupplung, ohne dass eine Hilfsperson die Zugmaschine einweisen muss.

Die Nachrüstung bestehender Gespanne mit einer erfindungsgemäßen Vorrichtung kann dadurch erleichtert werden, dass der Sender eine von der Empfängereinheit und dem Rechner bzw. Mikrokontroller unabhängige Energieversorgung aufweist. Dabei ist es bspw. möglich, den Sender batteriebetrieben an dem Anhänger zu befestigen, während die Empfängereinheit und der Rechner mit der Zugmaschine verbunden und an deren Energieversorgung angeschlossen ist.

Nachfolgend wird die Erfindung anhand eines Ausführungsbeispiels und unter Bezugnahme auf die Zeichnung näher erläutert.

Es zeigen:
- Fig. 1: eine schematische Darstellung einer Zugmaschine und eines Anhängers mit der erfindungsgemäßen Vorrichtung,
- Fig. 2: eine schematische Darstellung der Empfängereinheit und des Senders und
- Fig. 3: eine schematische Darstellung der Empfängereinheit und des Senders in gegenüber Fig. 2 veränderter Ausrichtung zueinander.

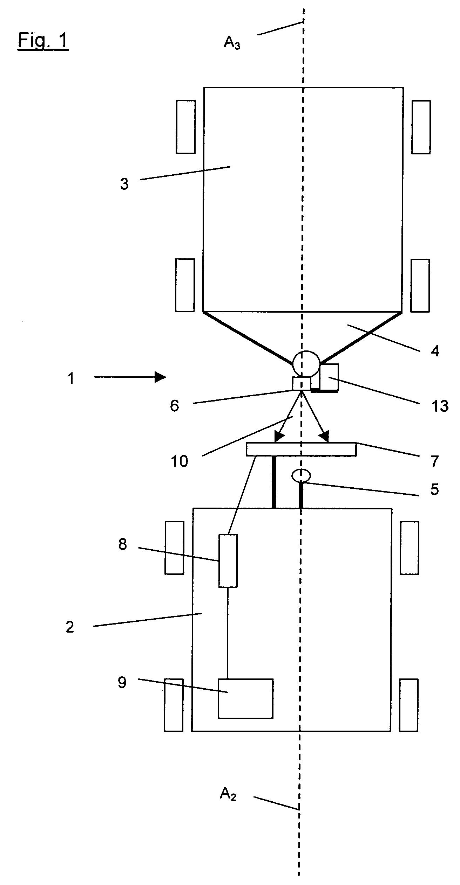

In Fig. 1 ist die Vorrichtung 1 schematisch zusammen mit einer angedeuteten Zugmaschine 2 und einem Anhänger 3 dargestellt. An dem Anhänger 3 ist die anhängerseitige Kupplung 4, bspw. eine Deichsel mit einer Öse zur Verbindung des Anhängers 3 mit der Zugmaschine 2 vorgesehen. In gleicher Weise ist an der Zugmaschine 2 eine zugmaschinenseitige Kupplung 5, bspw. ein Kupplungshaken oder dgl. befestigt.

Die Vorrichtung 1 umfasst einen im Bereich der anhängerseitigen Kupplung 4 befestigten Sender 6 sowie eine Empfängereinheit 7, die in der Nähe der zugmaschinenseitigen Kupplung 5 angebracht ist. Die Empfängereinheit 7 ist über eine schematisch angedeutete Verbindung, die bspw. ein Kabel oder eine Einrichtung zur Funkübermittlung sein kann, mit einem Rechner 8 bzw. einem Mikrokontroller verbunden, der wiederum mit einer Sprach- und/oder Anzeigeausgabe 9 in Verbindung steht.

Der Sender 6 strahlt einen Signalstrahl 10, der in den Figuren durch zwei Pfeile angedeutet ist, in einem definierten Winkel α ab. Der Signalstrahl 10 kann dabei bspw. ein modulierter Infrarotstrahl sein.

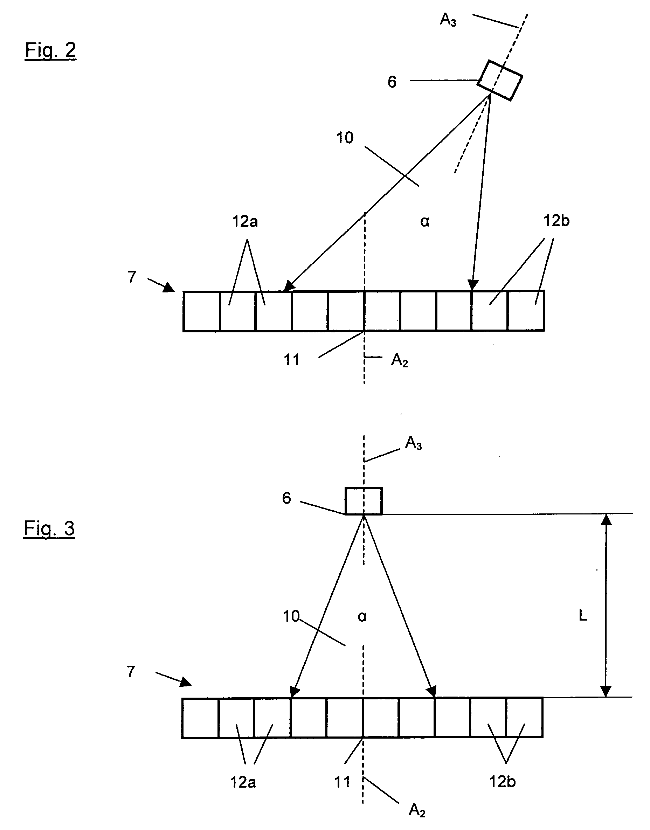

Wie aus der vergrößerten Darstellung der Fig. 2 und 3 ersichtlich, weist die Empfängereinheit 7 mehrere beidseits eines zentralen Punktes 11 nebeneinander angeordnete Empfänger 12a und 12b auf. Der zentrale Punkt 11 der Empfängereinheit 7 liegt dabei auf der Längsachse A₂ der Zugmaschine 2, so dass sich auf beiden Seiten es zentralen Punktes 11 gleich große Empfänger 12a bzw. 12b paarweise in gleichem Abstand zum zentralen Punkt 11 erstrecken. In gleicher Weise ist auch der Sender 6 auf der Längsachse A₃ des Anhängers 3 positioniert, so dass der Signalstrahl 10 mittig durch die Längsachse A₃ des Anhängers 3 durchteilt wird.

Um den Anhänger 3 mit der Zugmaschine 3 zu verbinden, d.h. die anhängerseitige Kupplung 4 und die zugmaschinenseitige Kupplung 5 aneinander zu koppeln, ist es notwendig, dass die Zugmaschine 2 relativ zu dem Anhänger 3 so positioniert wird, dass die anhängerseitige Kupplung 4 und zugmaschinenseitige Kupplung 5 dicht beieinander liegen. Hierzu sollten einerseits die Längsachsen A₂ der Zugmaschine 2 und A₃ des Anhängers 3 im Wesentlichen fluchtend miteinander ausgerichtet werden und die anhängerseitige Kupplung 4 und die zugmaschinenseitige Kupplung aneinander angenähert werden.

In Fig. 2 ist die Ausgangssituation einer derartigen Annäherung schematisch dargestellt, wobei die anhängerseitige Kupplung 4 und die zugmaschinenseitige Kupplung 5 der Einfachheit halber weggelassen wurden und lediglich der Sender 6 und die Empfängereinheit 7 sowie die beiden Längsachsen A₂ und A₃ der Zugmaschine bzw. des Anhängers abgebildet sind. Der unter dem festgelegten Abstrahlwinkel α von dem Sender 6 ausgesandte Signalstrahl 10 trifft, wenn die Längsachsen A₂ und A₃ der Zugmaschine bzw. des Anhängers nicht fluchtend zueinander ausgerichtet sind, auf eine Anzahl von Empfängern 12a und 12b der Empfängereinheit 7. Dabei ist einerseits die Intensität der von den einzelnen Empfängern 12a und 12b aufgenommene Signalstrahlen 10 in Abhängigkeit der Entfernung zum Sender 6 unterschiedlich. Zum anderen wird auch eine verschieden große Zahl von Empfängern 12a und 12b auf den beiden Seiten des zentralen Punktes 11 der Empfängereinheit 7 von dem Signalstrahl 10 erfasst. Durch eine Auswertung der Anzahl der Empfänger 12a auf der in Fig. 2 linken Seite des zentralen Punktes 11 und der Empfänger 12b auf der rechten Seite des zentralen Punktes 11 sowie durch eine Auswertung der Intensität der auf die Empfänger 12a und 12b auftreffenden Signalstrahlen 10 ist es möglich, die Lage des Senders 6 und damit der Längsachse A₃ des Anhängers 3 relativ zu der Empfängereinheit 7 mit der Längsachse A₂ der Zugmaschine 2 in dem Rechner 8 zu ermitteln. Die Daten werden von dem Rechner 8 dann zu der Sprach- und/oder Anzeigeausgabe 9 weitergeleitet, um den Fahrer der Zugmaschine 2 so zu dirigieren, dass er die Zugmaschine 2 im Wesentlichen fluchtend zu dem Anhänger 3 ausrichten kann.

Sind die Längsachsen A₂ der Zugmaschine 2 und A₃ des Anhängers 3, wie in Fig. 3 dargestellt, im Wesentlichen fluchtend zueinander ausgerichtet, kann der Abstand L zwischen dem Sender 6 und der Empfängereinheit 7 bspw. durch eine Signalstärkenmessung oder eine Messung der Amplitudenhöhe des Signalstrahls 10 durch die einzelnen Empfänger 12a bzw. 12b ermittelt werden, um die anhängerseitige Kupplung 4 in direkter Nähe zu der zugmaschinenseitigen Kupplung 5 zu positionieren.

Die reine Messung der Signalstärke des Signalstrahls 10 ist dabei bei beliebiger Ausrichtung der Längsachsen A₂ und A₃ zueinander möglich. Diese wird jedoch häufig durch Verschmutzung des Senders 6 bzw. einzelner Empfänger 12a bzw. 12b ungenau. Um dies zu vermeiden, ist es bei einer fluchtenden Ausrichtung der Längsachsen A₂ und A₃ zueinander möglich, eine automatische Kalibrierung der Abstandsmessung durchzuführen. Hierzu wird bspw. in dem in Fig. 3 gezeigten Moment, in dem der äußere Rand des Signalstrahls 10, der in den Figuren durch die Pfeile angedeutet ist, gerade von einem Empfängerpaar 12a und 12b, das im gleichen Abstand zu dem zentralen Punkt 11 der Empfängereinheit 7 angeordnet ist, nicht mehr erfasst wird, durch den bekannten Abstrahlwinkel α des Signalstrahls 10 und die bekannte Entfernung der Empfänger 12a und 12b zu dem zentralen Punkt 11 der Abstand L zwischen dem Sender 6 und der Empfängereinheit 7 exakt und unabhängig von der Signalstärke des Signalstrahls 10 bestimmt. Die weitere Annäherung des Senders 6 mit der anhängerseitigen Kupplung 4 an die Empfängereinheit 7 mit der zugmaschinenseitigen Kupplung 5 erfolgt dabei nach der Kalibrierung mit hoher Genauigkeit, bspw. über die Messung der Amplitudenhöhe des Signalstrahls 10.

Um Störungen durch auf die Empfänger 12a und 12b einfallendes Umgebungslicht vermeiden zu können, kann der Signalstrahl 10 als ein moduliertes Signal, bspw. als ein modulierter Infrarotstrahl abgesandt werden.

Um die Nachrüstung der Vorrichtung 1 an einer Zugmaschine 2 und einem Anhänger 3 zu erleichtern, kann der Sender 6 an dem Anhänger 3 mit einer eigenen Energieversorgung 13 versehen sein, die von der Energieversorgung der Empfängereinheit 7, des Rechners 8 und der Sprach- und/oder Anzeigeausgabe 9 in der Zugmaschine 2 unabhängig ist. Der batteriebetriebene Sender 6 lässt sich damit schnell auf einen Anhänger 3 aufsetzen, während die Empfängereinheit 7, der Rechner 8 und die Sprach- und/oder Anzeigeausgabe 9 fest in der Zugmaschine 2 eingebaut sein können. Die Übermittlung der Daten zwischen der Empfängereinheit 7 und dem Rechner 8 bzw. zwischen dem Rechner 8 und der Sprach- und/oder Anzeigausgabe 9 kann über Kabel oder durch Funk erfolgen.

Selbstverständlich ist es auch möglich, die Empfängereinheit 7 an der anhängerseitigen Kupplung 4 zu befestigen, während der Sender 6 an der zugmaschinenseitigen Kupplung 5 vorgesehen ist. Darüber hinaus ist die Vorrichtung 1 generell zur Positionierung von beliebigen Gegenständen relativ zueinander geeignet und nicht auf den Einsatz in Zugmaschinen und Anhängern beschränkt.

### Bezugszeichenliste:

- 1: Vorrichtung
- 2: Zugmaschine
- 3: Anhänger
- 4: anhängerseitige Kupplung
- 5: zugmaschinenseitige Kupplung
- 6: Sender
- 7: Empfängereinheit
- 8: Rechner/Mikrokontroller
- 9: Sprach- und/oder Anzeigeausgabe
- 10: Signalstrahl
- 11: zentraler Punkt der Empfängereinheit 7
- 12a, 12b: Empfänger
- 13: Energieversorgung
- A₂: Längsachse der Zugmaschine 2
- A₃: Längsachse des Anhängers 3
- L: Abstand des Senders 6 zu der Empfängereinheit 7
- α: Abstrahlwinkel des Signalstrahls 10

## Patentansprüche

1. Verfahren zur Positionierung zweier Gegenstände zueinander, die jeweils eine Längsachse (A₂, A₃) aufweisen, insbesondere zur Positionierung einer anhängerseitigen Kupplung (4) relativ zu einer zugmaschinenseitigen Kupplung (5), mittels eines der Längsachse (A₃) des ersten Gegenstandes (3) zugeordneten Senders (6), einer zugeordneten Empfängereinheit (7), die mehrere nebeneinander angeordnete Empfänger (12a, 12b) beidseits eines der Längsachse (A₂) des zweiten Gegenstandes (2) zugeordneten zentralen Punktes (11) der Empfängereinheit (7) umfasst, **dadurch gekennzeichnet, dass** der Sender (6) einen Signalstrahl (10) in einem definierten Abstrahlwinkel (α) abstrahlt, welcher von der mit einem Rechner (8) bzw. Mikrokontroller verbundenen Empfängereinheit (7) erfasst wird, so dass die beiden Längsachsen (A₂, A₃) im Wesentlichen miteinander fluchtend ausgerichtet werden, indem die Gegenstände (2, 3) relativ zueinander derart bewegt werden, bis die gleiche Anzahl von Empfängern (12a, 12b) auf beiden Seiten des zentralen Punktes (11) der Empfängereinheit (7) den Signalstrahl (10) mit im Wesentlichen gleicher Intensität erfassen und die beiden Gegenstände (2, 3) über eine Abstandsmessung mittels des Senders (6) und der Empfängereinheit (7) gesteuert aneinander angenähert werden.

2. Verfahren nach Anspruch 1, **dadurch gekennzeichnet, dass** nach der fluchtenden Ausrichtung der Längsachsen (A₂, A₃) der Gegenstände (2, 3) zueinander vor oder während der Annäherung der Gegenstände (2, 3) eine Kalibrierung der Abstandsmessung erfolgt, indem der Abstand (L) zwischen dem Sender (6) und der Empfängereinheit (7) berechnet wird, wenn der Signalstrahl (10) zwei im gleichen Abstand von dem zentralen Punkt (11) der Empfängereinheit (7) angeordnete Empfänger (12a, 12b) verlässt.

3. Verfahren nach Anspruch 2, **dadurch gekennzeichnet, dass** nach der Kalibrierung die Abstandsmessung über die Messung der Amplitudenhöhe des Signalstrahls (10) erfolgt.

4. Verfahren nach einem der Ansprüche 1 bis 3, **dadurch gekennzeichnet, dass** der Signalstrahl (10) ein modulierter Infrarotstrahl ist.

5. Verfahren nach einem der vorangegangenen Ansprüche, **dadurch gekennzeichnet, dass** die von der Empfängereinheit (7) empfangenen Signalstrahlen (10) als Daten an den Rechner (8) bzw. Mikrokontroller weitergeleitet werden, von welchem sie an eine Sprach- und/oder Anzeigeausgabe (9) weitergeleitet werden.

6. Verfahren nach Anspruch 5, **dadurch gekennzeichnet, dass** die Daten von der Empfängereinheit (7) über eine Kabelverbindung oder mittels Funkübertragung an den Rechner (8) bzw. Mikrokontroller und/oder die Sprach- und/oder Anzeigeausgabe (9) weitergeleitet werden.

7. Vorrichtung zum Durchführen eines Verfahrens nach einem der vorangegangenen Ansprüche mit einem Sender (6), einer Empfängereinheit (7) und einem Rechner (8) bzw. Mikrokontroller, wobei der Sender (6) der Längsachse (A₂) eines der Gegenstände (2) zugeordnet ist und zur Ausrichtung der Gegenstände (2, 3) zueinander und zur Abstandsmessung einen Signalstrahl (10) mit einem festgelegten Abstrahlwinkel (α) aussendet und die Empfängereinheit (7) der Längsachse (A₃) des anderen Gegenstandes (3) zugeordnet ist und mehrere beidseits eines zentralen Punktes (11) nebeneinander angeordnete Empfänger (12a, 12b) umfasst.

8. Vorrichtung nach Anspruch 7, **dadurch gekennzeichnet, dass** dem Rechner (8) bzw. Mikrokontroller zur Ausgabe der von der Empfängereinheit (7) empfangenen Daten eine Sprach- und/oder Anzeigeausgabe (9) zugeordnet ist.

9. Vorrichtung nach Anspruch 7 oder 8, **dadurch gekennzeichnet, dass** der Sender (6) eine von der Empfängereinheit (7) und dem Rechner (8) bzw. Mikrokontroller unabhängige Energieversorgung (13) aufweist.
